Europäisches Patentamt

(19) European Patent Office  (11) Publication number: **0 139 829**

Office européen des brevets  **B1**

(12) **EUROPEAN PATENT SPECIFICATION**

(45) Date of publication of patent specification: **09.12.87**  (51) Int. Cl.⁴: **C 09 K 5/06**

(21) Application number: **84106653.3**

(22) Date of filing: **12.06.84**

(54) **Reversible phase change composition for storing energy.**

(30) Priority: **15.06.83 US 504763**

(43) Date of publication of application:
**08.05.85 Bulletin 85/19**

(45) Publication of the grant of the patent:
**09.12.87 Bulletin 87/50**

(84) Designated Contracting States:
**BE CH DE FR GB IT LI NL SE**

(56) References cited:
**DE-A-3 201 314**
**PATENTS ABSTRACTS OF JAPAN, vol. 7, no. 34 (C-150)1179r, 10th February 1983; & JP - A - 57 185 377 (MITSUBISHI DENKI K.K.) 15-11-1982**
**PATENTS ABSTRACTS OF JAPAN, vol. 6, no. 239 (C-137)1117r, 26th November 1982; & JP - A - 57 139 168 (MATSUSHITA DENKI SANGYO K.K.) 27-08-1982**
**PATENTS ABSTRACTS OF JAPAN, vol. 6, no. 180 (C-125)1058r, 14th September 1982; & JP - A - 57 96 079 (MITSUBISHI DENKI K.K.) 15-06-1982**
**PATENTS ABSTRACTS OF JAPAN, vol. 7, no. 22 (C-148)1167r, 28th January 1983; & JP - A - 57 180 684 (MATSUSHITA DENKO K.K.) 06-11-1982**

(73) Proprietor: **THE DOW CHEMICAL COMPANY**
**2030 Dow Center Abbott Road P.O. Box 1967**
**Midland, MI 48640 (US)**

(72) Inventor: **Lane, George A.**
**3802 Wintergreen Drive**
**Midland Michigan 48640 (US)**
Inventor: **Rossow, Harold E.**
**2888 Poseyville Road**
**Midland Michigan 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Courier Press, Leamington Spa, England.

# 0 139 829

## Description

The invention relates to reversible liquid/solid phase change compositions (PCM). More particularly, the invention resides in phase change compositions for the storage of energy comprising a mixture of hydrated calcium bromide ($CaBr_2 \cdot 6H_2O$) and hydrated calcium chloride ($CaCl_2 \cdot 6H_2O$) having added thereto a modifier selected from KBr, KCl, and mixtures thereof.

Phase change materials in which the heat of fusion of various hydrated salt compositions is employed are well known in the literature. In *ASHRAE Journal* of September 1974, pages 38—45, M. Telkes in an article entitled "Solar Energy Storage", evaluated the thermal physical and other pertinent properties of PCM's on the basis of economics, applicability, corrosion, toxicity, and availability for large scale installations. Among the materials evaluated were various salt hydrates and their eutectics, including eutectics of sodium sulfate decahydrate (Glaubers Salt—$Na_2SO_4 \cdot 10H_2O$) which melts at the relatively low temperature of 13°C which is adapted for the storage of "coolness". A eutectic is mentioned consisting of a mixture of sodium sulfate decahydrate with ammonium chloride ($NH_4Cl$) and sodium chloride (NaCl), which decrease the normal melting point of the sodium sulfate decahydrate from 32° to 13°C. Borax is used as a nucleating agent and an inorganic thickening agent is added to prevent settling.

The purpose of storing "coolness", as described by M. Telkes, is to lessen peak-time power demands from air conditioners which can cause "brown-outs" during hot summer days. The system uses a standard heat pump air conditioner, which is operated during the night, for storing up "coolness" in the PCM by freezing it at a temperature of 13°C. During the day, when cooling is needed, the stored "coolness" is released by blowing room air through heat-exchangers filled with the phase change material. In this way, peak demands for electric power can be diminished, resulting in peak-shaving. The PCM is liquefied after the stored "coolness" is extracted as night approaches and the peak electric demand is over. After about 10 p.m., the air conditioner resumes operation, cooling the PCM again, completely solidifying it by early morning. The "coolness" storage material is thus re-used every day, as needed.

PCM's for use in a temperature range between 3° and 11°C were also investigated by S. I. Friedman and J. C. Dudley as described in report *NSF/RANN/SE/GI 27976/TR 72/9*, entitled "Off-Peak Air Conditioning Using Thermal Energy Storage", August, 1972. Here, the authors report that the salt hydrate of $Na_2SO_4 \cdot NH_4Cl \cdot 10H_2O$ melts incongruently, with the salt being partially soluble in the water of crystallization. The authors also report that long-term maintenance at temperatures below the freezing point resulted in additional water diffusing to the unhydrated salt, thereby forming additional crystalline salt hydrate. Research was then in progress on the freezing of salt hydrates in an attempt to make the theoretical amount of the latent heat of fusion available. This work involved the use of thickening agents to prevent separation of the saturated liquid and precipitate.

In *ASME*, September 1, 1977, J. D. Meakin et al., in an article entitled "Coolness Storage in a Sodium Sulfate Decahydrate Mixture", tested a combination of salts that M. Telkes had reported on for use as a PCM at a temperature of approximately 13°C. In three independent tests, the authors concluded that the salt performed as if the undissolved anhydrous sodium sulfate was not able to combine with its water of hydration during an eight hour hydration process. As a result, the heat of transformation was less than anticipated. The authors finally concluded that there were continued difficulties in measuring the performance of the salt system (sodium sulfate decahydrate) because heating and cooling rates had a significant effect on performance. In effect, the authors found that the heat storage capacity of the sodium sulfate mixture was only one-half that anticipated by the "complete diffusion" theory. Accordingly, sodium sulfate decahydrate admixed with other salts for the storage of "coolness" has not proven to be economically effective even with the addition of thickening agents to combat the tendency of the PCM toward stratification and settling out of solid sodium sulfate to the bottom of the container.

GB—B—1,531,953, issued to C. Doomernik, November 15, 1978, discloses a cold accumulator, comprising a container filled with a eutectic mixture and provided with heat exchange surfaces which separate the eutectic mixture from passages for a refrigerating agent which serves as a means for passing the refrigerating agent through the passages for liquefaction (melting) and freezing, respectively, of the eutectic mixture.

Doomernik reports that large industrial installations, such as slaughter houses, have to supply a great amount of cold during the period wherein meat is brought into the slaughter house and for some additional time thereafter until the desired low temperature is reached again. In most cases, however, large refrigerating capacity is only necessary during working hours, usually for about eight hours a day, while during the rest of the time there need only be supplied a sufficient amount of "coolness" to compensate for the losses due to incomplete insulation. In such cases, employment of a cold accumulator renders it possible to use a much smaller refrigerating apparatus which, however, may work continuously. The extra "cooling" required during the peak hours may then be derived from the accumulator. The eutectic mixture in the accumulator is then refrozen in the period when there is little loss of cold from the freezers. Accordingly, Doomernik reports that it is possible to profit by the cheap night tariff rate for supply of electric current and, at the same time, avoid the surcharges which may be imposed by an electric supply company during high peak loads.

Doomernik makes specific reference to eutectic mixtures of water with $MgSO_4 \cdot 7H_2O$ (which melts at a eutectic temperature of 5.2°C) with KCl (having a eutectic temperature of 10.7°C) and $NH_4Cl$ (having a

2

eutectic temperature of 15.8°C). Other eutectic mixtures are mentioned which melt at temperatures of from 21° to 55°C.

Other prior developments particularly concerned with the storage of "coolness" are, for example, Japanese Patent No. 76/76183 to Mitsubishi Electric Corporation. The patent discloses a "coolness" storage material comprising $CaCl_2 \cdot 6H_2O$ admixed with $MgBr_2 \cdot 6H_2O$ and $Sr(OH)_2$ having a melting temperature of 12°C, and Japanese Publication No. 75/90582 to Mitsubishi Electric Corporation published July 19, 1975, which discloses a cold storage material having a melting point of 10°C and comprising a mixture of $CaCl_2 \cdot 6H_2O$ with one or more additives selected from $FeCl_3$; NaCl; KCl and $NH_4Cl$.

DE—A—3201314 refers to a heat storage composition comprising as main compound calcium chloride hexahydrate, a compound for preventing the crystallization of calcium chloride tetrahydrate and a nucleating agent selected from the group of KCl, RbCl, NaCl, NaF, $Na_3AlF_6$ and other double sodium fluorides. There is mentioned that the composition can comprise calcium bromide hexahydrate to reduce the crystallization of the calcium chloride tetrahydrate phase. A crystallisation of the tetrahydrate can be avoided by adjusting the water content to the range of 6.0 to 6.14 moles/moles $CaCl_2$.

Heat storage materials are, of course, well known from the literature and are described by David Eissenberg and Charles Wyman in *Solar Age,* May, 1980; pages 12—16, in an article entitled "What's In Store for Phase Change". On page 16, Eissenberg et al. lists various PCM's which have found acceptance in industry and the home, e.g., paraffin; Glauber's salt; and $CaCl_2 \cdot 6H_2O$ with additives. These PCM's are useful as heat storage materials and have a phase change temperature over the range of from 18° to 46°C.

A comprehensive discussion of PCM's for use as thermal energy storage materials is given in *Solar Heat Storage, Latent Heat Materials,* by G. A. Lane, CRC Press, Boca Raton, Florida, 1983, pages 2—48, 143—148.

Reference can also be made to (1) Japanese Publication No. 81/08483, Mitsubishi Electric Corporation, published January 28, 1981, which discloses a PCM comprising $CaCl_2 \cdot 6H_2O$ and/or $CaBr_2 \cdot 6H_2O$ which is mixed with a small amount of an agent for preventing supercooling such as $BaHPO_4$ and other barium salts. The mixture solidifies at a temperature of 22°C and generates 68.5 cal/cm$^3$ heat of fusion at 29°C; (2) Japanese Patent Publication No. 76/43387, Mitsubishi Electric Corporation, published April 14, 1976, for a composition comprising a mixture of $CaCl_2 \cdot 6H_2O$ and $MgCl_2 \cdot 6H_2O$ having a melting point of 30°C, and (3) Japanese Patent No. 969,909, Hitachi Ltd., granted August 31, 1979, for a PCM of $CaCl_2 \cdot 6H_2O$ containing various barium and strontium salts as seed crystals to prevent supercooling.

The subject of thermal buffering or PCM heat sinks is discussed by Schneider et al., in the proceedings of the *Journées Internationales d'Etude sur le Chauffage Solaire dans le Batiment,* in Liege, Belgium, September 12—14, 1977, Paper No. 40.

None of the aforementioned heat storage materials describe the unique composition of the invention in which the semicongruent melting behavior of the hydrated $CaBr_2/CaCl_2$ mixture has been modified with a specific modifier.

It is the object of the invention to employ a modifier for the hydrated $CaBr_2/CaCl_2$ mixture of the invention is particularly effective to modify the semicongruent melting behavior of the mixture to reduce the formation of crystalline $CaBr_2$ and $CaCl_2$ hydrate phases other than the hexahydrate phase.

This object is solved by a reversible liquid/solid phase change composition comprising an admixture of hydrated $CaBr_2$ and $CaCl_2$ which has added thereto a modifier to modify the melting behaviour of the hydrated $CaBr_2/CaCl_2$ mixture to reduce the formation of crystalline $CaBr_2/CaCl_2$ hydrate phases other than the hexahydrate phase and a nucleating agent, which is characterized in that, the mixture has a melting temperature of from 7° to 50°C and comprises from 20—67 weight percent $CaBr_2$, from greater than 0 to 38 weight percent $CaCl_2$ and from 28 to 50 weight percent water, said modifier being selected from KBr, KCl and mixtures thereof and being added in an amount greater than 0 to less than 10 weight percent, but sufficient to modify the semicongruent melting behaviour of the hydrated $CaBr_2/CaCl_2$ mixture.

The invention also includes an energy storage device comprising an encapsulating means having a reversible liquid/solid phase change composition hermetically sealed in said encapsulating means to prevent the evaporation of water from the composition, said composition comprises an admixture of hydrated $CaBr_2$ and $CaCl_2$ and has added thereto a modifier to modify the melting behaviour of the hydrated $CaBr_2/CaCl_2$ mixture to reduce the formation of crystalline $CaBr_2/CaCl_2$ hydrate phases other than the hexahydrate phase and a nucleating agent, which is characterized in that the mixture has a melting temperature of from 7° to 50°C and comprises from 20 to 67 weight percent $CaBr_2$, from greater than 0 to 38 weight percent $CaCl_2$ and from 28 to 50 weight percent water, said modifier being selected from KBr, KCl and mixtures thereof and being added in an amount greater than 0 to less than 10 weight percent but sufficient to modify the semicongruent melting behaviour of the $CaBr_2/CaCl_2$ mixture during freezing of the composition.

Preferably, the PCM of the invention also includes a nucleating agent which is particularly effective to reduce supercooling of the PCM to less than 3°C during retrieval of the stored energy by crystallization. The nucleating agents which have been found to be effective in the PCM of the invention are selected from $SrCl_2$, $Ba(OH)_2$, BaO, $SrBr_2$, $Sr(OH)_2$, $SrI_2$, $BaI$, $BaCO_3$, and mixtures thereof.

The phase change compositions of the invention are useful over a broad temperature range of from 7° to 50°C and thus can be employed (1) for the storage of "coolness" over a temperature range of from 7° to

$17°C$; (2) for the storage of "heat" over a temperature range of from 25° to 50°C, and (3) as a buffer or heat sink to modulate diurnal swings in the ambient temperature range of from 17° to 27°C.

In addition to PCM's which are useful for the storage of "coolness" over a temperature range of from 7° to 17°C, and for the storage of heat over a temperature range of from 25° to 50°C, the present invention also includes within its scope PCM's which have proven to be useful as "Buffers" or heat sinks for modulating diurnal fluctuations in the ambient temperature range of from 17° to 27°C. Such buffers or heat sinks are particularly useful in passive solar heated buildings or structures such as greenhouses or hothouses. Excess solar energy received during the daytime is used to melt or partially melt the PCM. At night, this energy is recovered by freezing the PCM and is transported or allowed to radiate to the building's other tempered space to raise the temperature, i.e. to heat the building or space.

The invention allows a method of storing energy, comprising the steps of preparing a reversible liquid/solid phase change composition, which melts at a temperature from 7° to 50°C, by admixing from 20 to 67 weight percent $CaBr_2$, from greater than zero to 38 weight percent $CaCl_2$ and from 28 to 50 weight percent water to form a hydrated mixture, adding a modifier in an amount greater than zero but less than 10 weight percent and in an amount sufficient to modify the semicongruent melting behavior of the $CaBr/CaCl_2$ mixture to reduce, during freezing of the composition, the formation of crystalline hydrate phases other than the hexahydrate phase, said modifier being selected from KBr, KCl and mixtures thereof, introducing the composition into an encapsulating means for use as an energy storage device, and hermetically sealing the encapsulating means to prevent the escape of water vapors from the encapsulating means.

The composition of the present invention preferably has added thereto one or more nucleating agents in an amount sufficient to reduce supercooling of the composition to less than about 3°C during crystallization. Preferably, the nucleating agent is added in an amount greater than zero and up to 5.0 weight percent. More preferably, the nucleating agent is added in an amount of from 0.50 to 2.0 weight percent. Although amounts greater than 5.0 weight percent may be present in the composition without detriment to the function of the composition, nucleators in amounts greater than 5.0 weight percent generally do not show any further benefits in reducing supercooling.

The term "enthalpy" used herein defines a thermodynamic function of a system, equivalent to the internal energy plus the product of the pressure and the volume. Enthalpy is measured by the heat content per unit mass, e.g., in BTU's per pound.

The term "congruent melting" herein used defines a mixture of ingredients, based on hydrated $CaBr_2/CaCl_2$ for which, at the melting point, solid and liquid phases are in stable equilibrium, i.e., the solid phase contains no hydrated $CaBr_2$ or $CaCl_2$ other than the hexahydrate or solid solutions thereof, and the liquid phase contains, for every mole of $CaBr_2$ and $CaCl_2$, 6 moles of water plus sufficient water to form the stable hydrate of any additive materials in solution.

"Semicongruent melting" occurs when a phase change material has two or more hydrate forms with differing solid compositions and melting points. The material can be transformed in other hydrate forms before either complete melting or freezing occurs, resulting in a broadened melting point range. In addition, there is the temporary loss in thermal storage capacity. Calcium chloride hexahydrate is an example of a semicongruently melting phase change material.

"Incongruent melting" phase change materials yield two distinct phases upon melting, i.e., a saturated solution and a precipitate of an insoluble anhydrous salt. If the precipitate settles out of the solution, the anhydrous salt will not hydrate completely upon cooling and some thermal storage capacity will be lost with each freeze/melting cycle. Incongruent melting, as observed with sodium sulfate decahydrate, for example, is a more serious problem because it can result in a continual loss of latent heat storage capacity.

The term "supercooling" refers to a discrepancy between the temperature at which freezing initiates and the melting temperature of a given liquid/solid phase change material when cooled and heated under quiescent conditions.

The term "eutectic" or "eutectic mixture" designates a mixture of two or more components mixed in such a ratio that the melting point of the mixture is lower than that of either salt, and the entire mixture at one and the same temperature passes from the solid form into the liquid form, and vice versa.

The term "modifier" includes, in addition to the KCl, KBr, and mixtures thereof such as have been specified herein, the precursors of such modifiers which are non-detrimental to the function of the PCM's of the invention. More particularly, the modifiers herein referred to are either anhydrous or hydrated compositions of potassium salt precursors which would form the potassium salt upon addition to the hydrated $CaBr_2/CaCl_2$ mixture.

It has been found that the composition of the invention is also improved by the addition of a small amount of NaCl and/or NaBr which lowers the freezing point of the composition.

Impurities may also be present in the PCM of the invention in minor amounts of less than about 3.0 weight percent and provided that such impurities do not detrimentally affect the function of the basic hydrated $CaBr_2/CaCl_2$ mixture. Impurities may include, for example, LiCl; $MgCl_2$; or other calcium salts such as $CaCO_3$ or $CaSO_4$.

For air conditioning, a PCM should preferably melt at a temperature at least 5°C below the temperature of a room or space so that efficient heat exchange can be obtained between room air and the coolness storage material. Accordingly, at a room temperature of about 22°C the maximum useful PCM melting

**0 139 829**

point is about 17°C. As the freezing point of the PCM becomes lower, i.e., lower than about 5°C, the refrigeration equipment which is used to charge the coolness storage increases in size and rating. Accordingly, a minimum practical PCM freezing point is about 7°C.

One aspect of the present invention resides in the development of a PCM for storing "coolness" in which the PCM melts at a temperature of from 7° to 17°C and, more particularly, a composition which is substantially congruent melting. It has been discovered that a PCM based on a minimum-melting mixture of $CaBr_2 \cdot 6H_2O$ and $CaCl_2 \cdot 6H_2O$ melts at a temperature of about 16°C. This mixture is not fully congruent melting, however, since some tetrahydrate crystals can form during freezing, thereby decreasing the storage capacity of the PCM. This defect was overcome by adding a suitable potassium salt, preferably KCl, KBr, or mixtures thereof to the composition.

Examples of PCM's which are particularly well adapted for storage of "coolness" and melting in the temperature range of from 7° to 17°C are the following, in their order of preference with Example 3A being the most preferred composition:

Example 1A
$CaBr_2$—from 28 to 43 wt. %;
$CaCl_2$—from 14 to 31 wt. %;
KBr and/or KCl—in an amount of greater than zero and less than 10 wt. %;
$H_2O$—balance of up to 100 wt. %.

Example 2A
$CaBr_2$—from 30 to 41 wt. %;
$CaCl_2$—from 18 to 26 wt. %;
KBr and/or KCl—from 2 to 5 wt. %;
$H_2O$—balance of up to 100 wt. %.

Example 3A
$CaBr_2$—from 32 to 37 wt. %;
$CaCl_2$—from 20 to 24 wt. %;
KBr and/or KCl—from 3 to 4 wt. %;
$H_2O$—balance of up to 100 wt. %;

Examples of PCM's which are particularly well adapted as heat storage materials melting in the range of from 25° up to 50°C are the following, in their order of preference with Example 3B being the most preferred composition:

Example 1B
$CaBr_2$—from 47 to 67 wt. %;
$CaCl_2$—greater than zero but less than 10 wt. %;
KBr and/or KCl—in an amount greater than zero and less than 10 wt. %;
$H_2O$—from 29 to 43 wt. %.

Example 2B
$CaBr_2$—from 50 to 66 wt. %;
$CaCl_2$—greater than zero but less than 10 wt. %;
KBr and/or KCl—from 2 to 5 wt. %;
$H_2O$—from 29 to 43 wt. %.

Example 3B
$CaBr_2$—from 52 to 65 wt. %;
$CaCl_2$—greater than zero but less than 10 wt. %;
KBr and/or KCl—from 3 to 4 wt. %;
$H_2O$—from 33 to 36 wt. %.

Examples of PCM's which are particularly well adapted as temperature buffers or heat sinks in passive solar energy heated structures melting in the temperature range of from 17° to 27°C are the following, in their order of preference with Example 3C being the most preferred composition:

Example 1C
$CaBr_2$—from 38 to 55 wt. %;
$CaCl_2$—from 10 to 25 wt. %;
KBr and/or KCl—in an amount greater than zero and less than 10 wt. %;
$H_2O$—from 29 to 43 wt. %.

Example 2C
$CaBr_2$—from 42 to 55 wt. %;
$CaCl_2$—from 10 to 17 wt. %;
KBr and/or KCl—from 2 to 5 wt. %;
$H_2O$—from 36 to 40 wt. %.

5

# 0 139 829

Example 3C

CaBr₂—from 46 to 52 wt. %;
CaCl₂—from 10 to 15 wt. %;
KBr and/or KCl—from 2 to 5 wt. %;
H₂O—from 37 to 39 wt. %.

Examples of PCM's which are particularly well adapted as temperature buffers or heat sinks in passive solar energy heated structures melting in the temperature range of from 17° to 27°C are the following, in their order of preference with Example 6C being the most preferred composition:

Example 4C

CaBr₂—from 20 to 28 wt. %;
CaCl₂—from 21 to 38 wt. %;
KBr and/or KCl—in an amount greater than zero and less than 10 wt. %;
H₂O—balance up to 100 wt. %.

Example 5C

CaBr₂—from 20 to 28 wt. %;
CaCl₂—from 25 to 36 wt. %;
KBr and/or KCl—from 2 to 5 wt. %;
H₂O—balance up to 100 wt. %.

Example 6C

CaBr₂—from 20 to 28 wt. %;
CaCl₂—from 28 to 35 wt. %;
KBr and/or KCl—from 3 to 4 wt. %;
H₂O—balance up to 100 wt. %.

Although the amount of KBr and/or KCl present in each of the above compositions is stated to be greater than zero weight percent it should be sufficient to improve the freezing behavior of the PCM. It has been found that an amount of greater than 10 weight percent generally has no additional benefit in the freezing behavior of the PCM.

The present invention preferably also provides for the addition of select nucleating agents in order to reduce supercooling in the hydrated CaBr₂/CaCl₂ mixture.

The avoidance of supercooling during the crystallization of hydrated PCM's, as by the addition of various nucleating agents, is generally known in the literature. In addition to publications previously cited, reference is here made to Japanese Publication 76—70,193 (Mitsubishi Electric Corporation); and Swedish Patent No. 410,004, issued January 3, 1980. The storage materials described in these publications are based on a CaCl₂ · 6H₂O composition. Reference is also made to Applicants' copending U.S. applications Serial No. 364,159, filed March 31, 1982 and Serial No. 417,275, filed September 13, 1982, both applications by G. A. Lane, et al.

Nucleators which have been found to be effective with the PCM of the invention are barium and strontium salts, or mixtures thereof. Suitable nucleators are SrCl₂, Ba(OH)₂, BaO, SrBr₂, Sr(OH)₂, SrI₂, BaI₂, BaCO₃ and mixtures thereof.

The following examples illustrate the effectiveness of reversible liquid/solid phase change compositions of the invention for storage of energy based on mixtures of hydrated CaBr₂, and CaCl₂.

Example 7

This example is not an example of the invention but is included to show how a minimum-melting mixture of CaBr₂ · 6H₂O and CaCl₂ · 6H₂O was identified. A container of melted CaBr₂ · 6H₂O was cooled until a substantial quantity of crystals had been formed and an equilibrium had been established. Melted CaCl₂ · 6H₂O was then added by increments, allowing equilibrium to be established after each addition. At the equilibrium condition, the equilibrium temperature of the liquid composition was determined. The liquid composition was determined by chemical and instrument analysis. The minimum-melting composition was found at a temperature of 15.8°C and contained 54.0 weight percent CaBr₂ · 6H₂O and 46.0 weight percent CaCl₂ · 6H₂O.

Example 8

This example is also not an example of the invention but shows that the minimum-melting composition of Example 7 is semicongruently melting, that is, at equilibrium the tetrahydrate species crystallize initially before hexahydrate crystals begin to form. A container of the following melted salt mixture comprising 32.0 weight percent CaBr₂; 21.0 weight percent CaCl₂, and 47.0 weight percent H₂O was prepared and cooled until a substantial quantity of crystals had formed and equilibrium had been established. A melted material of the composition comprising 38.0 weight percent CaBr₂; 25.3 weight percent CaCl₂, and 36.7 weight percent H₂O, was then added incrementally, allowing equilibrium to be attained after each addition, and determining equilibrium temperature and liquid composition. From the

6

data thus generated, the hexahydrate and tetrahydrate liquidi were obtained, and their intersection point, the peritectic point, was found to be at 16.3°C and the composition was analyzed at 34.0 weight percent $CaBr_2$; 23.2 weight percent $CaCl_2$, and 42.8 weight percent $H_2O$. This composition was analyzed to contain 6.27 moles of water per gram atom of calcium. At a ratio of 6.00 moles of water per gram atom of calcium, the tetrahydrate liquidus was found to be at a temperature of 19.3°C. Thus, the hexahydrate composition must cool about 3.0°C, forming tetrahydrate crystals, at equilibrium, before the hexahydrate crystals can begin to form. This segregation of the material causes reduced heat storage capacity for the PCM.

Example 9

This experiment is an example of the invention and was conducted in the same manner as Example 7, except that the starting material was $CaBr_2 \cdot 6H_2O$ saturated with KBr, and the material added incrementally was $CaCl_2 \cdot 6H_2O$ saturated with KCl. The minimum melting composition was found at a temperature of 14.6°C and the composition contained 53.9 weight percent $CaBr_2 \cdot 6H_2O$; 42.9 weight percent $CaCl_2 \cdot 6H_2O$; 1.9 percent KBr, and 1.3 percent KCl.

Example 10

This experiment is an example of the invention and was conducted in the same manner as Example 8, except that the starting material was of the following composition: 32.9 weight percent $CaBr_2$; 19.7 weight percent $CaCl_2$; 41.4 weight percent $H_2O$; 3.0 weight percent KBr, and 3.0 weight percent KCl. A mixture of the following composition was added incrementally: 37.5 weight percent $CaBr_2$; 22.5 weight percent $CaCl_2$; 33.9 weight percent $H_2O$; 3.0 weight percent KBr, and 3.0 weight KCl. In this example, however, the hexahydrate and tetrahydrate liquidi were found to intersect at a eutectic (rather than peritectic) point at a temperature of 14.7°C. The ratio of water to calcium was about 5.9 moles of water per gram atom of calcium. Further, at a ratio of 6.00 moles of water per gram atom of calcium, the hexahydrate liquidus was found to be at a temperature of 14.7°C, indicating a congruent-melting system with no tetrahydrate formation at equilibrium.

Example 11

This experiment is an example of the invention and was conducted in the same manner as Example 8, except that the starting material was of the following composition: 43.4 percent $CaBr_2$; 13.3 percent $CaCl_2$; 39.7 percent $H_2O$; 2.7 percent KBr, 0.9 percent KCl; and the material which was added incrementally having the following composition: 46.0 percent $CaBr_2$, 13.6 percent $CaCl_2$; 36.7 percent $H_2O$; 2.7 percent KBr, 0.9 percent KCl. The hexahydrate and tetrahydrate liquidi were found to intersect at a temperature of 19.7°C, and at about 6.09 moles of water per gram atom of calcium, indicating a system in which very little tetrahydrate can form.

Example 12

This experiment is an example of the invention and was conducted in the same manner as Example 8, except that the starting material was of the following composition: 48.0 weight percent $CaBr_2$; 9.6 weight percent $CaCl_2$; 38.4 weight percent $H_2O$; 3.3 weight percent KBr, and 0.8 weight percent KCl; and the material added incrementally had the composition: 51.1 weight percent $CaBr_2$, 10.2 weight percent $CaCl_2$; 35.1 weight percent $H_2O$; 2.9 weight percent KBr, and 0.7 weight percent KCl. The hexahydrate and tetrahydrate liquidi were found to intersect at a temperature of 24°C, and at about 5.8 moles of water per gram atom of calcium, indicating a system in which no tetrahydrate will form at equilibrium.

Example 13

This example is an example of the invention and was conducted in the same manner as Example 7, except that the starting material was $CaBr_2 \cdot 6H_2O$ saturated with KBr and NaBr, and the material added incrementally was $CaCl_2 \cdot 6H_2O$ saturated with KCl and NaCl. The minimum-melting composition was found at a temperature of 14.2°C, and the composition contained 24.7 weight percent $CaBr_2$; 30.4 weight percent $CaCl_2$; 2.0 weight percent KBr; 2.5 weight percent KCl; 0.2 weight percent NaBr; 0.2 weight percent NaCl; and 40.0 weight percent $H_2O$. This composition is improved over that of Example 9, in that addition of NaBr and/or NaCl has lowered the melting temperature.

Example 14

This experiment is an example of the invention in which a sample containing 34.57 weight percent $CaBr_2$; 21.98 weight percent $CaCl_2$; 40.19 weight percent $H_2O$; 1.90 weight percent KBr, and 1.36 weight percent KCl was divided into several aliquots, and freezing-melting tests were conducted. One of the aliquots was tested without any additives, but various nucleating agents were added to the other aliquots at the level of 0.5 weight percent in order to determine the effectiveness of such nucleators in the mixture. In each case, ten freeze-thaw cycles were induced by immersing a glass container with 80 grams of the material alternately in ice water and room temperature. Temperature of the sample was obtained from a thermocouple placed in the center of the sample. For each freezing cycle, the amount of supercooling (cooling below the melting point before onset of crystallization) was noted and these values were averaged for the ten cycles. Table I summarizes the data obtained with the addition of selected nucleators.

7

**0 139 829**

TABLE I
Effect of nucleators on supercooling

| Nucleator | Melting point, °C | Supercooling, °C |
|---|---|---|
| None | 13—15 | 3.4 |
| $SrCl_2$ | 13—15 | 1.0 |
| $Ba(OH)_2$ | 12—15 | 1.1 |
| BaO | 12—15 | 1.2 |
| $SrBr_2$ | 13—16 | 1.4 |
| $Sr(OH)_2$ | 13—15 | 2.1 |
| $SrI_2$ | 12—15 | 2.6 |
| $BaI_2$ | 13—14.5 | 2.8 |
| $BaCO_3$ | 14—15 | 2.9 |

All of the nucleating additives listed in Table I were found to be effective in reducing supercooling of the PCM of the present invention.

**Claims**

1. A reversible liquid/solid phase change composition comprising an admixture of hydrated $CaBr_2$ and $CaCl_2$ which has added thereto a modifier to modify the melting behaviour of the hydrated $CaBr_2/CaCl_2$ mixture to reduce the formation of crystalline $CaBr_2/CaCl_2$ hydrate phases other than the hexahydrate phase and a nucleating agent, characterized in that, the mixture has a melting temperature of from 7° to 50°C and comprises from 20—67 weight percent $CaBr_2$, from greater than 0 to 38 weight percent $CaCl_2$ and from 28 to 50 weight percent water, said modifier being selected from KBr, KCl and mixtures thereof and being added in an amount greater than 0 to less than 10 weight percent, but sufficient to modify the semicongruent melting behaviour of the hydrated $CaBr_2/CaCl_2$ mixture.

2. The composition of claim 1 characterized in that including one or more nucleating agents in the composition in an amount sufficient to reduce supercooling of the composition to less than 3°C during retrieval of the stored energy by crystallisation.

3. The composition of claim 2, characterized in that, the nucleating agent is selected from $SrCl_2$, $Ba(OH)_2$, BaO, $SrBr_2$, $Sr(OH)_2$, $SrI_2$, $BaI_2$, $BaCO_3$ and mixtures thereof and is present in an amount of from greater than 0 to about 5 weight percent.

4. The composition of any of the preceding claims characterized in that containing impurities of NaCl, NaBr and mixtures thereof along with other incidental impurities in an amount of less than 3% by weight of the composition.

5. An energy storage device comprising an encapsulating means having a reversible liquid/solid phase change composition hermetically sealed in said encapsulating means to prevent the evaporation of water from the composition, said composition comprises an admixture of hydrated $CaBr_2$ and $CaCl_2$ and has added thereto a modifier to modify the melting behaviour of the hydrated $CaBr_2/CaCl_2$ mixture to reduce the formation of crystalline $CaBr_2/CaCl_2$ hydrate phases other than the hexahydrate phase and a nucleating agent, characterized in that the mixture has a melting temperature of from 7° to 50°C and comprises from 20 to 67 weight percent $CaBr_2$, from greater than 0 to 38 weight percent $CaCl_2$ and from 28 to 50 weight percent water, said modifier being selected from KBr, KCl and mixtures thereof and being added in an amount greater than 0 to less than 10 weight percent but sufficient to modify the semicongruent melting behaviour of the $CaBr_2/CaCl_2$ mixture during freezing of the composition.

6. The device of claim 5 characterized in that the composition has added thereto a nucleating agent in an amount sufficient to reduce supercooling of the composition to less than 3°C during retrieval of the stored energy by crystallisation, said nucleating agent being selected from $SrCl_2$, $Ba(OH)_2$, BaO, $SrBr_2$, $Sr(OH)_2$, $SrI_2$, $BaI_2$, $BaCO_3$, and mixtures thereof and wherein the nucleating agent is present in an amount of greater than 0 to 5 weight percent.

**Patentansprüche**

1. Reversibel die Phasen flüssig/fest ändernde Zusammensetzung enthaltend eine Mischung aus hydratisiertem $CaBr_2$ und $CaCl_2$, zu der ein Modifiziermittel zum Verändern des Schmelzverhaltens der

8

hydratisierten CaBr$_2$/CaCl$_2$-Mischung, um die Bildung anderer kristalliner CaBr$_2$/CaCl$_2$-Hydratphasen als der Hexahydratphase zu verringern, und ein keimbildendes Mittel zugesetzt wurde, dadurch gekennzeichnet, daß die Mischung eine Schmelztemperatur von 7° bis 50°C aufweist und von 20 bis 67 Gew.% CaBr$_2$, von mehr als 0 bis 38 Gew.% CaCl$_2$ und von 28 bis 50 Gew.% Wasser enthält, das Modifiziermittel aus KBr, KCl und Mischungen derselben ausgewählt ist und zugesetzt wurde in einer Menge von mehr als 0 bis weniger als 10 Gew.%, jedoch ausreichend, um das semikongruente Schmelzverhalten der hyratisierten CaBr$_2$/CaCl$_2$-Mischung zu verändern.

2. Zusammensetzung nach Anspruch 1, dadurch gekennzeichnet, daß sie ein oder mehrere keimbildende Mittel in einer Menge enthält, die ausreicht, um die Unterkühlung der Zusammensetzung auf weniger als 3°C während der Rückgewinnung durch Kristallisation gespeicherter Energie zu verringern.

3. Zusammensetzung nach Anspruch 2, dadurch gekennzeichnet, daß das keimbildende Mittel aus SrCl$_2$, Ba(OH)$_2$, BaO, SrBr$_2$, Sr(OH)$_2$, SrI$_2$, BaI$_2$, BaCO$_3$ und Mischungen derselben ausgewählt ist und einer Menge von mehr als 0 bis etwa 5 Gew.% vorhanden ist.

4. Zusammensetzung nach jedem der vorstehenden Ansprüche, dadurch gekennzeichnet, daß sie Verunreinigungen von NaCl, NaBr und Mischungen derselben zusammen mit anderen unwesentlichen Verunreinigungen einer Menge von weniger als 3 Gew.% der Zusammensetzung enthält.

5. Einrichtung zum Speichern von Energie in einem geschlossenen System mit einer hermetisch in Einkapselungsmitteln eingeschlossenen, die Phasen flüssig/fest reversibel ändernden Zusammensetzung, um das Verdampfen von Wasser aus der Zusammensetzung zu vermeiden, wobei die Zusammensetzung eine Mischung aus hydratisiertem CaBr$_2$ und CaCl$_2$ enthält und zu der ein Modifiziermittel zum Verändern des Schmelzverhaltens der hydratisierten CaBr$_2$/CaCl$_2$-Mischung, um die Bildung anderer kristalliner CaBr$_2$/CaCl$_2$-Hydratphasen als der Hexahydratphase zu verringern, und ein keimbildendes Mittel zugesetzt wurde, dadurch gekennzeichnet, daß die Mischung eine Schmelztemperatur von 7° bis 50°C aufweist und von 20 bis 67 Gew.% CaBr$_2$, von mehr als 0 bis 38 Gew.% CaCl$_2$ und von 28 bis 50 Gew.% Wasser enthält, das Modifiziermittel aus KBr, KCl und Mischungen derselben ausgewählt ist und zugesetzt wurde in einer Menge von mehr als 0 bis weniger als 10 Gew.%, jedoch ausreichend, um das semikongruente Schmelzverhalten der CaBr$_2$/CaCl$_2$-Mischung während des Erstarrens der Zusammensetzung zu verändern.

6. Zusammensetzung nach Anspruch 5, dadurch gekennzeichnet, daß der Zusammensetzung ein keimbildendes Mittel in einer Menge zugesetzt wurde, die ausreicht, um Unterkühlung der Zusammensetzung während der Rückgewinnung von durch Kristallisation gespeicherter Energie auf weniger als 3°C. zu verringern, das keimbildende Mittel aus SrCl$_2$, Ba(OH)$_2$, BaO, SrBr$_2$, Sr(OH)$_2$, SrI$_2$, BaI$_2$, BaCo$_3$ und Mischungen derselben ausgewählt ist und das keimbildende Mittel in einer Menge von mehr als 0 bis 5 Gew.% anwesend ist.

## Revendications

1. Composition à changement réversible de phase liquide/solide comprenant un mélange de CaBr$_2$ et CaCl$_2$ hydraté, auquel est ajouté un modificateur destiné à modifier le comportement de fusion du mélange CaBr$_2$/CaCl$_2$ hydraté en vue de réduire la formation de phases d'hydrates de CaBr$_2$/CaCl$_2$ cristallins autres que la phase d'hexahydrate, un agent de nucléation, caractérisée par le fait que le mélange présente une température de fusion allant de 7° à 50°C et comprend de 20 à 67% en poids de CaBr$_2$, de plus de 0 jusqu'à 38% en poids de CaCl$_2$, et de 28 à 50% en poids d'eau, ledit modificateur étant choisi parmi KBr, CKl et leurs mélanges et étant ajouté dans une proportion supérieure à 0, et inférieure à 10% en poids, mais suffisante pour modifier le comportement de fusion semicongruente du mélange CaBr$_2$/CaCl$_2$ hydraté.

2. Composition selon la revendication 1, caractérisée par le fait qu'il est inclus, dans cette composition, un ou plusieurs agents de nucléation présents dans une proportion suffisante pour réduire la surfusion de la composition à moins de 3°C, pendant la récupération de l'énergie stockée par la cristallisation.

3. Composition selon la revendication 2, caractérisée par le fait que l'agent de nucléation est choisi parmi SrCl$_2$, Ba(OH)$_2$, BaO, SrBr$_2$, Sr(OH)$_2$, SrI$_2$, BaI$_2$, BaCO$_3$ et leurs mélanges et est présent dans une proportion supérieure à 0 jusqu'à environ 5 pourcent en poids.

4. Composition selon l'une des revendications précédentes, caractérisée par le fait qu'elle contient des impuretés de NaCl, de NaBr et de leurs mélanges, en même temps que d'autres impuretés accidentelles, dans une proportion inférieure à 35% en poids de la composition.

5. Dispositif de stockage d'énergie comprenant un moyen d'encapsulation, une composition à changement réversible de phase liquide/solide étant enfermée de manière étanche et hermétique dans ledit moyen d'encapsulation, afin d'empêcher l'évaporation d'eau à partir de la composition, ladite composition comprenant un mélange de CaBr$_2$ et CaCl$_2$ hydraté, auquel est ajouté un modificateur destiné à modifier le comportement de fusion du mélange CaBr$_2$/CaCl$_2$ hydraté en vue de réduire la formation de phases d'hydrates de CaBr$_2$/CaCl$_2$ cristallins autres que la phase d'hexahydrate, et un agent de nucléation, caractérisé par le fait que le mélange présente une température de fusion allant de 7° à 50°C et comprend de 20 à 67% en poids de CaBr$_2$, de plus de 0 jusqu'à 38% en poids de CaCl$_2$, et de 28 à 50% en poids, ledit modificateur étant choisi parmi KBr, KCl et leurs mélanges et étant ajouté dans une proportion supérieure à 0, et inférieure à 10% en poids, mais suffisante pour modifier le comportement de fusion semicongruente du mélange CaBr$_2$/CaCl$_2$ hydraté au cours de la congélation de la composition.

6. Dispositif selon la revendication 5, caractérisé par le fait qu'il est ajouté à la composition un agent de nucléation présent dans une proportion suffisante pour réduire la surfusion de la composition à moins de 3°C pendant la récupération de l'énergie stockée par cristallisation, ledit agent de nucléation étant choisi parmi $SrCl_2$, $Ba(OH)_2$, $BaO$, $SrBr_2$, $Sr(OH)_2$, $SrI_2$, $BaI_2$, $BaCO_3$ et leurs mélanges, ledit agent étant présent dans une proportion supérieure à zéro jusqu'à 5 pourcent en poids.